(19) Europäisches Patentamt / European Patent Office / Office européen des brevets

(11) **EP 4 280 735 B1**

(12) **EUROPEAN PATENT SPECIFICATION**

(45) Date of publication and mention
of the grant of the patent:
**11.03.2026 Bulletin 2026/11**

(21) Application number: **22739707.2**

(22) Date of filing: **13.01.2022**

(51) International Patent Classification (IPC):
*H04W 72/02* (2009.01)   *H04W 72/40* (2023.01)
*H04W 72/566* (2023.01)   *H04W 92/18* (2009.01)
*H04L 1/1867* (2023.01)

(52) Cooperative Patent Classification (CPC):
**H04W 72/02; H04L 1/1896; H04W 72/40;
H04W 72/569; H04W 92/18**

(86) International application number:
**PCT/KR2022/000632**

(87) International publication number:
**WO 2022/154512 (21.07.2022 Gazette 2022/29)**

(54) **METHOD AND APPARATUS FOR PERFORMING PARTIAL SENSING ON BASIS OF PRIORITY IN NR V2X**

VERFAHREN UND VORRICHTUNG ZUR DURCHFÜHRUNG VON PARTIELLER ERFASSUNG AUF DER BASIS DER PRIORITÄT IN NR V2X

PROCÉDÉ ET APPAREIL DE RÉALISATION D'UNE DÉTECTION PARTIELLE SUR LA BASE DE LA PRIORITÉ DANS UN SYSTÈME NR V2X

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2021   US 202163137063 P
14.01.2021   US 202163137561 P
15.01.2021   US 202163138292 P
02.02.2021   US 202163144957 P
03.02.2021   US 202163145432 P
31.03.2021   KR 20210042317**

(43) Date of publication of application:
**22.11.2023 Bulletin 2023/47**

(73) Proprietor: **LG Electronics Inc.
Yeongdeungpo-gu
Seoul 07336 (KR)**

(72) Inventors:
• **KO, Woosuk
Seoul 06772 (KR)**
• **SEO, Hanbyul
Seoul 06772 (KR)**
• **LEE, Seungmin
Seoul 06772 (KR)**
• **HWANG, Daesung
Seoul 06772 (KR)**

(74) Representative: **Maikowski & Ninnemann
Patentanwälte Partnerschaft mbB
Postfach 15 09 20
10671 Berlin (DE)**

(56) References cited:
**WO-A1-2020/091458      US-A1- 2020 296 690
US-A1- 2020 344 722**

• **LG ELECTRONICS: "Discussion on resource allocation for power saving", vol. RAN WG1, no. e-Meeting; 20201026 - 20201113, 1 November 2020 (2020-11-01), XP052349256, Retrieved from the Internet <URL:https://ftp.3gpp.org/tsg_ran/ WG1_RL1/TSGR1_103-e/Docs/R1-2007895.zip R1-2007895 Discussion on resource allocation for power saving.docx> [retrieved on 20230407]**

- NEC: "Discussion on resource allocation for power saving", vol. RAN WG1, no. e-Meeting; 20201026 - 20201113, 23 October 2020 (2020-10-23), XP051945440, Retrieved from the Internet <URL:https://ftp.3gpp.org/tsg_ran/WG1_RL1/TSGR1_103-e/Docs/R1-2008950.zip R1-2008950.docx> [retrieved on 20201024]
- CATT: "Discussion on resource allocation for power saving", vol. RAN WG1, no. e-Meeting; 20200817 - 20200828, 8 August 2020 (2020-08-08), XP051917666, Retrieved from the Internet <URL:https://ftp.3gpp.org/tsg_ran/WG1_RL1/TSGR1_102-e/Docs/R1-2005691.zip R1-2005691 CATT Discussion on resource allocation for power saving-final.docx> [retrieved on 20200809]
- LG ELECTRONICS: "Discussion on resource allocation for power saving", 3GPP DRAFT; R1-2007895, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 24 October 2020 (2020-10-24), Mobile Competence Centre ; 650, route des Lucioles ; F-06921 Sophia-Antipolis Cedex ; France , XP051946543
- NEC: "Discussion on resource allocation for power saving", 3GPP DRAFT; R1-2008950, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945440

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

In 3GPP document R1-2007895 titled "Discussion on resource allocation for power saving", resource allocation to reduce power consumption of the UE for NR sidelink is discussed.

In 3GPP document R1-2008950 titled "Discussion on resource allocation for power saving", views are provided on the potential issues when introducing Rel. 14 random resource selection and partial sensing to Rel. 16 NR sidelink resource allocation mode 2.

### DISCLOSURE

### TECHNICAL PROBLEM

On the other hand, in sidelink communication, a UE may perform partial sensing operation to save power of the UE. In this case, for example, if both random resource selection and resource selection based on partial sensing are allowed to a UE, it may be ambiguous under what conditions partial sensing should be performed.

### TECHNICAL SOLUTION

The invention is defined by the independent claims. Features of certain embodiments are defined in the dependent claims.

### ADVANTAGEOUS EFFECTS

If random resource selection and resource selection based on partial sensing are allowed for a UE, the UE may perform partial sensing for a transmission packet above a threshold, thereby reducing the probability of transmission resource collisions.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.

FIG. 7 shows three cast types, based on an embodiment of the present disclosure.

FIG. 8 shows a resource unit for CBR measurement according to an embodiment of the present disclosure.

FIG. 9 shows a procedure in which a transmitting UE transmits first data to a receiving UE based on at least one first SL resource, according to an embodiment of the present disclosure.

FIG. 10 shows an example of partial sensing, according to an embodiment of the present disclosure.

FIG. 11 shows a method for a first device to transmit first data based on at least one first SL resource, according to an embodiment of the present disclosure.

FIG. 12 shows a method for a second device to receive first data based on at least one first SL resource from a first device, according to an embodiment of the present disclosure.

FIG. 13 shows a communication system 1, based on an embodiment of the present disclosure.

FIG. 14 shows wireless devices, based on an embodiment of the present disclosure.

FIG. 15 shows a signal process circuit for a transmission signal, based on an embodiment of the present disclosure.

FIG. 16 shows another example of a wireless device, based on an embodiment of the present disclosure.

FIG. 17 shows a hand-held device, based on an embodiment of the present disclosure.

FIG. 18 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

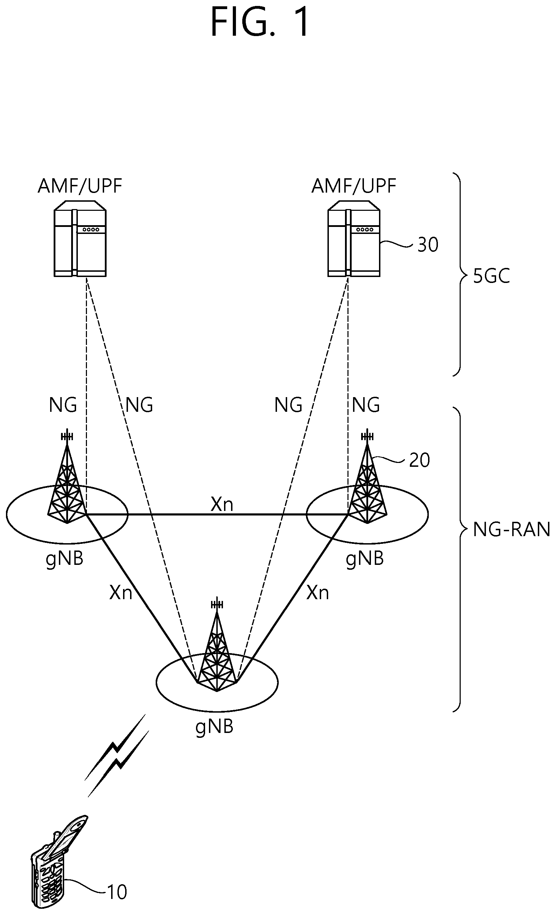

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

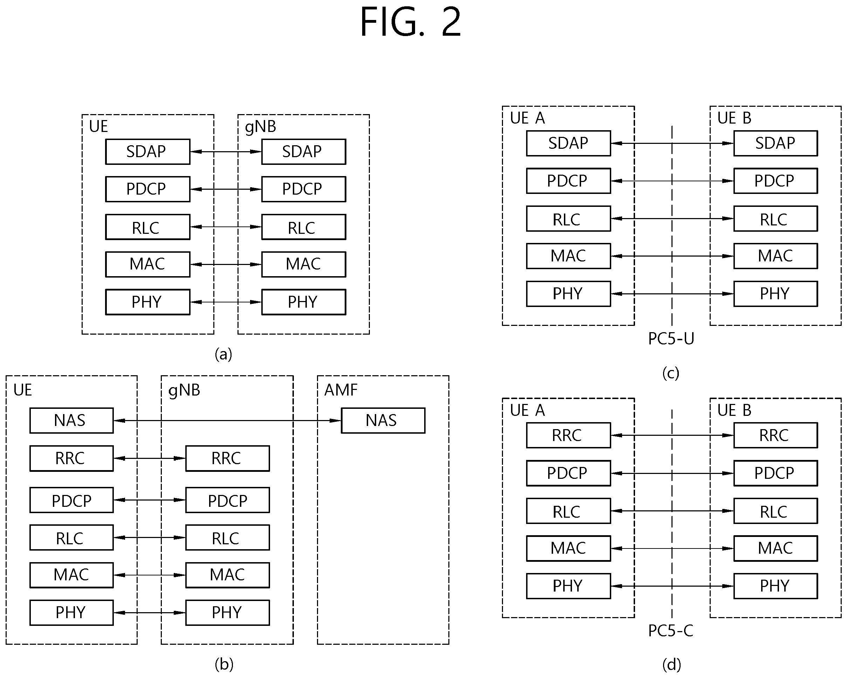

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

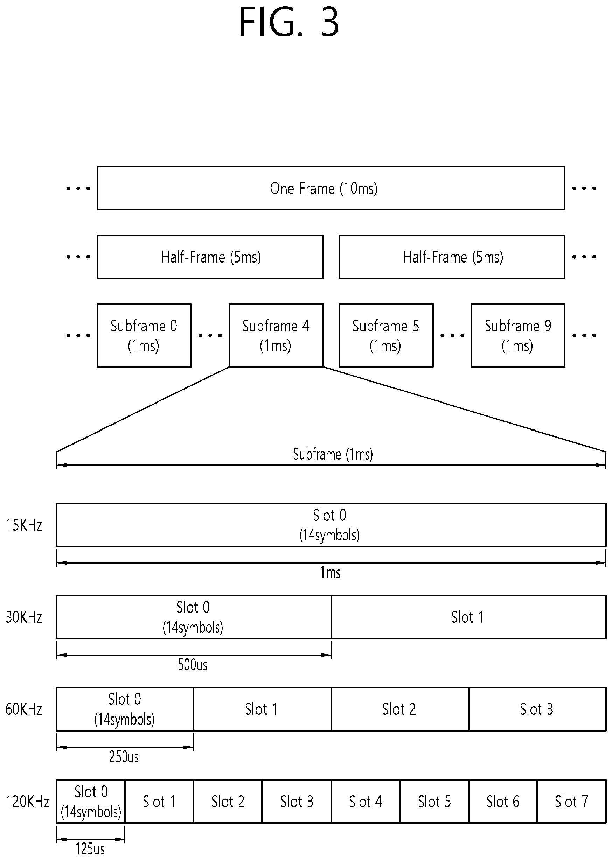

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

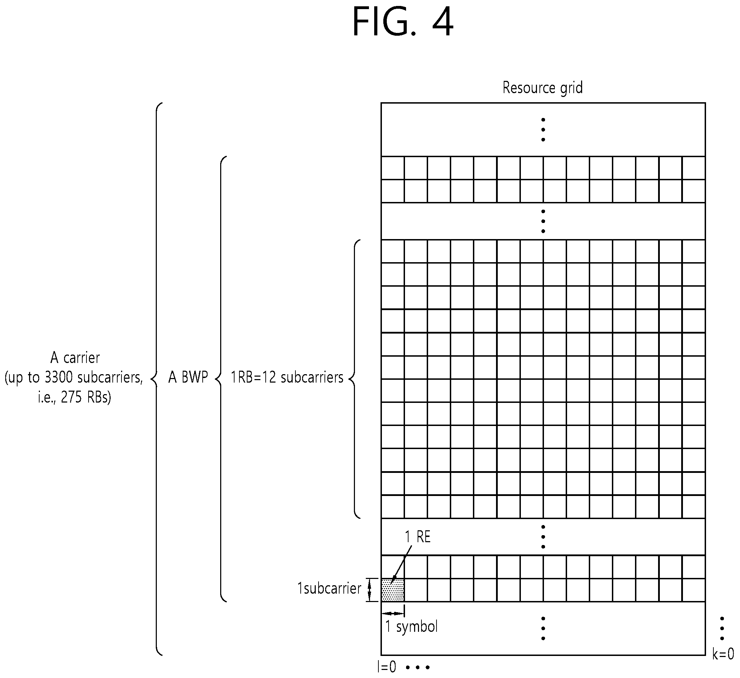

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

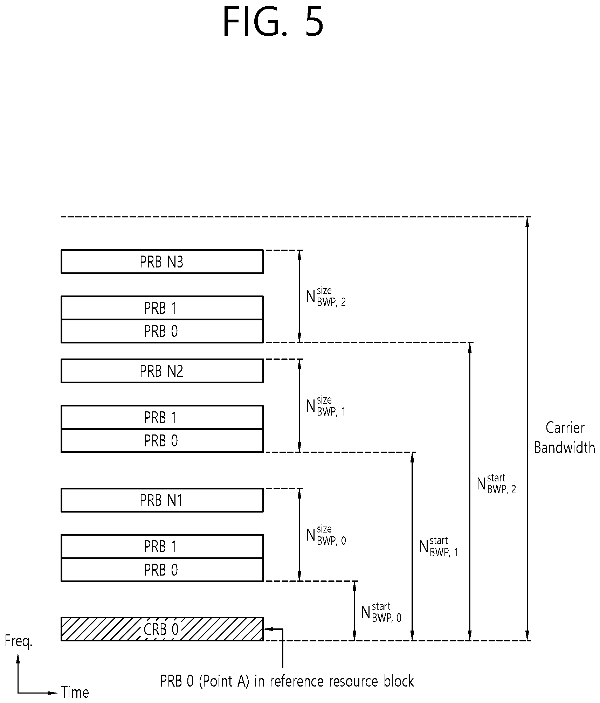

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

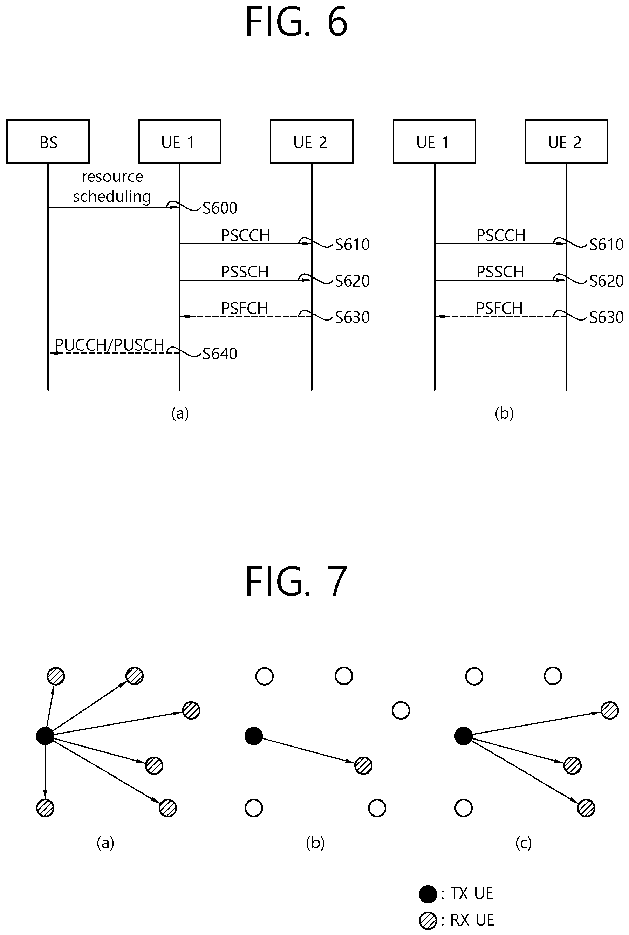

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI

- Resource pool index - ceiling ($\log_2 I$) bits, where $I$ is the number of resource pools for transmission configured by the higher layer parameter *sl-TxPoolScheduling.*
- Time gap - 3 bits determined by higher layer parameter *sl-DCI-ToSL-Trans*
- HARQ process number - 4 bits.
- New data indicator - 1 bit.
- Lowest index of the subchannel allocation to the initial transmission - ceiling ($\log_2(N^{SL}_{subChannel})$) bits
- SCI format 1-A field: Frequency resource assignment, Time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH,
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with *pdsch-HARQ-ACK-Codebook = dynamic,* 2 bits if the UE is configured with *pdsch-HAR Q-ACK-Codebook = semi-static*
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. Referring to (a) or (b) of FIG. 6, for example, a first UE may transmit SCI to a second UE on PSCCH. Alternatively, for example, a first UE may transmit two consecutive SCI (e.g., 2-stage SCI) to a second UE on PSCCH and/or PSSCH. In this case, a second UE may decode two consecutive SCIs (e.g., 2-stage SCI) in order to receive the PSSCH from a first UE. In this specification, SCI transmitted on PSCCH may be referred to as a 1st SCI, SCI 1, 1st-stage SCI or 1st-stage SCI format, and SCI transmitted on the PSSCH may be referred to as a 2nd SCI, SCI 2, 2nd-stage SCI or 2nd-stage SCI format. For example, the 1st-stage SCI format may include SCI format 1-A, and the 2nd-stage SCI format may include SCI format 2-A and/or SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling ($\log_2(N^{SL}_{subChannel}(N^{SL}_{subChannel}+1)/2)$) bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3

- Resource reservation period - ceiling ($\log_2 N_{rsv\_period}$) bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling ($\log_2 N_{pattern}$) bits, where $N_{pattern}$ is the number of DMRS patterns configured by higher layer parameter sl-PSSCH-DMRS-TimePatternList
- 2$^{nd}$-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described. SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, a first UE may receive the PSFCH. For example, a first UE and a second UE may determine PSFCH resources, and a second UE may transmit HARQ feedback to a first UE using the PSFCH resource. Referring to (a) of FIG. 6, in step S640, the first UE may transmit SL HARQ feedback to the base station through the PUCCH and/or the PUSCH.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if k mod $N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot}-1]$ among the $M^{PSFCH}_{PRB, set}$ PRB for slot i and subchannel j among the PSSCH slots associated with the PSFCH slot. Here, $M^{PSFCH}_{subch,slot} = M^{PSFCH}_{PRB,set} / (N_{subch} \cdot N^{PSFCH}_{PSSCH})$, $0 \leq i < N^{PSFCH}_{PSSCH}$, $0 \leq j < N_{subch}$, and the allocations starts in ascending order for i and continues in ascending order for j. A UE expects $M^{PSFCH}_{PRB,set}$ to be a multiple of $N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID})$ mod $R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 8.

[Table 8]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a UE procedure for determining a subset of resources to be reported to a higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, *prio*$_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.

- sl-RS-ForSensing selects if the UE uses the PSSCH-RSRP or PSCCH-RSRP measurement.

- sl-ResourceReservePeriodList

- sl-SensingWindow: internal parameter $T_0$ is defined as the number of slots corresponding to sl-SensingWindow msec.

- sl-TxPercentageList: internal parameter $X$ for a given $prio_{TX}$ is defined as sl-TxPercentageList $(prio_{TX})$ converted from percentage to ratio.

- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, \dots)$ may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 11. For example, when re-evaluation or pre-emption is triggered, a UE may select a candidate resource set (Sa) based on Table 11.

[Table 11]

| The following steps are used: |
|---|
| 1) A candidate single-slot resource for transmission $R_{x,y}$ is defined as a set of $L_{subCH}$ contiguous sub-channels with sub-channel $x+j$ in slot $t'^{SL}_y$ where $j = 0,\dots, L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where |
| - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP; |
| - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots). |
| The total number of candidate single-slot resources is denoted by $M_{total}$. |
| 2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. |
| 3) The internal parameter $Th(p_i, p_j)$ is set to the corresponding value of RSRP threshold indicated by the i-th field in *sl-Thres-RSRP-List,* where $i = p_i + (p_j - 1) * 8$. |
| 4) The set $S_A$ is initialized to the set of all the candidate single-slot resources. |
| 5) The UE shall exclude any candidate single-slot resource $R_{x,y}$ from the set $S_A$ if it meets all the following conditions: |

(continued)

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots according to clause 8.1.7,

$Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set

$(t'^{SL}_0, t'^{SL}_1, \ldots, t'^{SL}_{T'_{max}-1})$, otherwise slot $t'^{SL}_{n'}$ is the first slot after slot $n$ belonging to the set

$(t'^{SL}_0, t'^{SL}_1, \ldots, t'^{SL}_{T'_{max}-1})$; otherwise $Q$ = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0, r_1, r_2, \ldots$) is not a member of $S_A$, then the UE shall report re-evaluation of the resource $r_i$ to higher layers.

If a resource $r'_i$ from the set $(r'_0, r'_1, r'_2, \ldots)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 12 and 13.

[Table 12]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and *prio $_{TX}$* the priority to be transmitted in the associated SCI format 1 by the UE are all provided by higher layers.

(continued)

In sidelink transmission mode 3, when requested by higher layers in subframe *n* for a carrier, the UE shall determine the set of resources to be reported to higher layers in sensing measurement according to the steps described in this Subclause. Parameters $L_{subCH}$, $P_{rsvp\_TX}$ and *prio* $_{TX}$ are all provided by higher layers.

$C_{resel}$ is determined by $C_{resel}$=10*SL_RESOURCE_RESELECTION_COUNTER, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel *x+j* in subframe $t_y^{SL}$ where *j* =0,... ,$L_{subCH}$-1 . The UE shall determine by its implementation a set of subframes which consists of at least Y subframes within the time interval [$n + T_1$, $n + T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$ . UE selection of $T_2$ shall fulfil the latency requirement and $Y$ shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where *i = (a - 1) * 8 + b*.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$ , and "Resource reservation" field and "Priority" field in the received SCI format 1 indicate the values $P_{rsvp\_RX}$ and *prio* $_{RX}$ , respectively.

- PSSCH-RSRP measurement according to the received SCI format 1 is higher than $Th_{prioTX,prioRX}$.

- the SCI format received in subframe $t_m^{SL}$ ' or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P_{rsvp\_TX}'}$ for *q*=1, 2, ..., Q and *j=0*, 1, ..., $C_{resel}$-1. Here, $Q = \dfrac{1}{P_{rsvp\_RX}}$ if $P_{rsvp\_RX}$ <1 and $y'-m \leq P_{step} \times P_{rsvp\_RX} + P_{step}$, where $t_{y'}^{SL}$ is the last subframe of the $Y$ subframes , and $Q = 1$ otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 13]

7) For a candidate single-subframe resource $R_{x,y}$ remaining in the set $S_A$ , the metric $E_{x,y}$ is defined as the linear average of S-RSSI measured in sub-channels *x+k* for *k* = 0,...,$L_{subCH}$-1 in the monitored subframes in Step 2 that can be expressed by $t_{y-P_{step}*j}^{SL}$ for a non-negative integer *j*.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

(continued)

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,\dots,L_{subCH}-1$. The UE shall assume that any set of $L_{subCH}$ contiguous sub-channels included in the corresponding PSSCH resource pool within the time interval [$n + ,n+T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time].

The UE shall report set $S_B$ to higher layers.

---

Hereinafter, SL congestion control (sidelink congestion control) will be described.

For example, a UE may determine whether energy measured in a unit time/frequency resource is equal to or greater than a predetermined level, and the UE may adjust the amount and frequency of its own transmission resources according to the ratio of unit time/frequency resources in which energy of a certain level or higher is observed. In the present specification, a ratio of time/frequency resources in which energy of a certain level or higher is observed may be defined as a channel busy ratio (CBR). A UE may measure the CBR for each channel/frequency. Additionally, a UE may transmit the measured CBR to a network/base station.

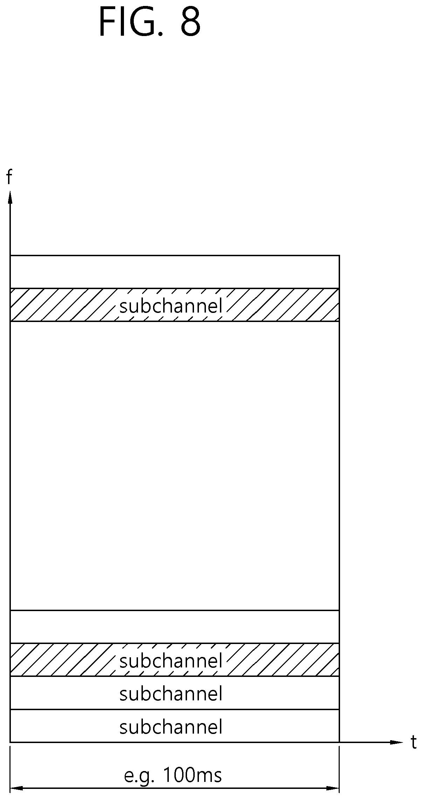

FIG. 8 shows a resource unit for CBR measurement according to an embodiment of the present disclosure. The embodiment of FIG. 8 may be combined with various embodiments of the present disclosure.

Referring to FIG. 8, CBR may mean the number of subchannels for which the RSSI measurement result value is equal to or greater than a preset threshold, as a result of the UE measuring Received Signal Strength Indicator (RSSI) in units of subchannels for a specific period (e.g., 100 ms). Alternatively, CBR may mean a ratio of subchannels having a value equal to or greater than a pre-configured threshold among subchannels during a specific period. For example, in the embodiment of FIG. 8, if it is assumed that the hatched subchannel is a subchannel having a value equal to or greater than a pre-configured threshold value, CBR may mean a ratio of hatched subchannels during a 100 ms interval. Additionally, a UE may report the CBR to a base station.

For example, when a PSCCH and a PSSCH are multiplexed in the frequency domain, a UE can perform one CBR measurement for one resource pool. Here, if a PSFCH resource is configured or previously configured, the PSFCH resource may be excluded from the CBR measurement.

Furthermore, congestion control considering the priority of traffic (e.g., packets) may be required. To this end, for example, a UE may measure channel occupancy ratio (CR). Specifically, a UE measures the CBR, and may determine the maximum value ($CRlimit_k$) of the channel occupancy ratio (Channel Occupancy Ratio k, $CR_k$) that traffic corresponding to each priority (e.g., k) can occupy according to the CBR. For example, a UE may derive the maximum value ($CRlimit_k$) of the channel occupancy for the priority of each traffic based on a predetermined table of CBR measurement values. For example, in the case of traffic having a relatively high priority, a UE may derive a maximum value of a relatively large channel occupancy. Thereafter, a UE may perform congestion control by limiting the sum of channel occupancy rates of traffics whose priority k is lower than i to a predetermined value or less. According to this method, a stronger channel occupancy limit may be applied to traffic having a relatively lower priority.

In addition, a UE may perform SL congestion control using methods such as transmission power size adjustment, packet drop, retransmission decision, transmission RB size adjustment (MCS adjustment), and the like.

Table 14 shows an example of SL CBR and SL RSSI.

[Table 14]

| SL CBR | |
|---|---|
| Definition | SL Channel Busy Ratio (SL CBR) measured in slot *n* is defined as the portion of sub-channels in the resource pool whose SL RSSI measured by the UE exceed a (pre-)configured threshold sensed over a CBR measurement window [*n-a, n*-1], wherein a is equal to 100 or $100 \cdot 2^{\mu}$ slots, according to higher layer parameter *sl-TimeWindowSizeCBR*. |
| Applicable for | RRC_IDLE intra-frequency, RRC_IDLE inter-frequency, RRC_CONNECTED intra-frequency, RRC_CONNECTED inter-frequency |

| SL RSSI | |
|---|---|
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, RRC_IDLE inter-frequency, RRC_CONNECTED intra-frequency, RRC_CONNECTED inter-frequency |

On the other hand, partial sensing in LTE-V2X, which only supports periodic transmissions, may not be appropriate for NR V2X systems that support both aperiodic and periodic transmissions.

In accordance with various embodiments of the present disclosure, methods of performing partial sensing suitable for NR-V2X systems that support both aperiodic and periodic transmissions, and devices that support the same, are proposed.

For example, whether various embodiments of the present disclosure are applied may be configured independently or differently for at least one of the elements/parameters such as service type, LCH-related priority, service-related priority, QoS requirements (e.g. latency, reliability, minimum communication range), PQI parameter, LCH/MAC PDU transmission with HARQ feedback enabled, LCH/MAC PDU transmission with HARQ feedback disabled, CBR measurement value of resource pool, SL cast type (e.g., unicast, groupcast, broadcast), SL groupcast HARQ feedback options (e.g., NACK ONLY based feedback, ACK/NACK based feedback, TX-RX distance based NACK ONLY feedback), SL mode 1 CG type (e.g., SL CG type 1, SL CG type 2), SL mode type (e.g., mode 1, mode 2), resource pool, whether it is a PSFCH resource is a configured resource pool, source ID, destination ID, source L2 ID, destination L2 ID, PC5 RRC connection link, SL link, connection state with a base station (e.g., RRC CONNECTED state, IDLE state, INACTIVE state), SL HARQ process, SL HARQ process ID, whether TX UE or RX UE performs SL DRX operation, whether it is a power saving UE, a case in which PSFCH TX and a PSFCH RX overlap from a specific UE perspective, a case in which a plurality of PSFCH TXs exceeding the UE capability overlap, a case in which PSFCH TX and/or PSFCH RX are omitted, or a case in which an RX UE actually successfully receives a PSCCH and/or PSSCH (re)transmission from a TX UE.

For example, the parameter configuration values related to various embodiments of the present disclosure may be configured independently or differently for at least one of the elements/parameters such as service type, LCH-related priority, service-related priority, QoS requirements (e.g. latency, reliability, minimum communication range), PQI parameter, LCH/MAC PDU transmission with HARQ feedback enabled, LCH/MAC PDU transmission with HARQ feedback disabled, CBR measurement value of resource pool, SL cast type (e.g., unicast, groupcast, broadcast), SL groupcast HARQ feedback options (e.g., NACK ONLY based feedback, ACK/NACK based feedback, TX-RX distance based NACK ONLY feedback), SL mode 1 CG type (e.g., SL CG type 1, SL CG type 2), SL mode type (e.g., mode 1, mode 2), resource pool, whether it is a PSFCH resource is a configured resource pool, source ID, destination ID, source L2 ID, destination L2 ID, PC5 RRC connection link, SL link, connection state with a base station (e.g., RRC CONNECTED state, IDLE state, INACTIVE state), SL HARQ process, SL HARQ process ID, whether TX UE or RX UE performs SL DRX operation, whether it is a power saving UE, a case in which PSFCH TX and a PSFCH RX overlap from a specific UE perspective, a case in which a plurality of PSFCH TXs exceeding the UE capability overlap, a case in which PSFCH TX and/or PSFCH RX are omitted, or a case in which an RX UE actually successfully receives a PSCCH and/or PSSCH (re)transmission from a TX UE.

Also, in various embodiments of the present disclosure, for example, a "configuration" or "designation" may refer to a form of communication from a base station to a UE over a predefined channel/signal (e.g., SIB, RRC, MAC CE). For example, a "configuration" or "designation" may refer to a form in which it is provided via PRE-CONFIGURATION. For example, a "configuration" or "designation" may be a form in which a UE informs another UE via a predefined channel/signal (e.g., SL MAC CE, PC5 RRC). Here, for example, the channel/signal may include a channel/signal for the physical layer or a higher layer.

Also, in various embodiments of the disclosure, for example, "PSFCH" may be replaced by at least one of NR PSSCH, NR PSCCH, NR SL SSB, LTE PSSCH, LTE PSCCH, LTE SL SSB, and UL channels/signals.

For example, in various embodiments of the present disclosure, a "specific threshold" may mean a threshold that is predefined or (pre)configured by at least one of the higher layers (including an application layer) of the network, base station, or UE. The term "specific configuration value" may refer to a value that is predefined or (pre)configured by at least one of the higher layers of the network, base station, or UE. Here, for example, the higher layer of a UE may comprise an application layer.

For example, in various embodiments of the present disclosure, "configured by the network/base station" may refer to an operation in which the base station (pre)configures a UE by upper layer RRC signaling, configures/signals to the UE via MAC CE, or signals to the UE via DCI.

For example, in various embodiments of the present disclosure, periodic-based partial sensing (PPS) may refer to an operation of performing sensing at time points corresponding to an integer multiple (k) of each of periods, based on a number of the periods corresponding to a specific configuration value, when performing sensing for resource selection. For example, the periods may be periods of the transmission resources configured within the resource pool. For example, a resource that is temporally earlier than a candidate resource that is subject to resource collision determination by an integer multiple of k values of each of the periods may be sensed. For example, said k value may be configured in the form of a bitmap.

For example, in various embodiments of the present disclosure, continuous partial sensing (CPS) may refer to an operation of performing sensing for all or a portion of a time domain given a specific configuration value. For example, CPS may include a short-term sensing operation of performing sensing for a relatively short period of time.

According to an embodiment of the present disclosure, a power saving UE may perform resource selection for SL communication by any of the following actions. For example, the operations may include at least one of performing partial sensing followed by resource re-evaluation/pre-emption, performing only partial sensing, performing random resource selection followed by resource re-evaluation/pre-emption, or performing only random resource selection.

For example, resource determination based on partial sensing may be performed based on a partial sensing pattern comprising partial sensing slots for performing partial sensing and intervals between partial sensing slots, and a set Y of candidate resources for determining transmission resources based on partial sensing.

For example, in order for a UE to detect aperiodic transmissions through partial sensing and, even for periodic transmissions, to detect transmissions of the same period with different start time points, a partial sensing pattern may not be determined by a single interval value or an integer multiple of a single interval value, but by interval values with different values.

According to an embodiment of the present disclosure, the interval values in a partial sensing pattern may comprise only different prime number values. For example, the interval values may be configured to have a disjoint relationship with each other. For example, the interval values may comprise different period values among the period values of the possible transmission resources configured in the SL resource pool. In this case, for example, the selection of the specific period values and the use of each period value as a specific interval value may be determined by a UE implementation. For example, the partial sensing pattern may be repeated at periodic intervals around a specific configuration value or a value configured by the network.

According to an embodiment of the present disclosure, an interval between candidate resources y in a set of candidate resources Y for partial sensing may comprise only different prime number values. For example, the intervals may be configured to have a disjoint relationship with each other. For example, the intervals may comprise different period values among the period values of the possible transmission resources configured in the SL resource pool. In this case, for example, the selection of specific period values and the use of each period value as the specific interval may be determined by a UE implementation.

According to an embodiment of the present disclosure, when both partial sensing based resource selection and random resource selection are allowed within an SL resource pool, a UE may perform partial sensing based resource selection under the following conditions.

For example, if both partial sensing based resource selection and random resource selection are allowed within an SL resource pool, and only periodic transmissions are allowed for the SL resource pool, a UE may perform partial sensing based resource selection.

For example, if both partial sensing based resource selection and random resource selection are allowed within an SL resource pool, and both periodic and aperiodic transmissions are allowed for the SL resource pool, a UE may perform partial sensing based resource selection.

For example, if both partial sensing based resource selection and random resource selection are allowed within an SL resource pool, and the priority of a transmission packet is lower than or equal to a specific threshold, a UE may perform partial sensing based resource selection to protect the transmission packets of other UEs. For example, the specific threshold may be a priority value related to a pre-emption configured in the resource pool.

For example, if both partial sensing based resource selection and random resource selection are allowed in an SL resource pool and the priority of a transmission packet is higher than a specific threshold, the UE may perform partial sensing based resource selection. By doing so, the UE may protect important packets that need to be transmitted by reducing the probability of transmission resource collisions. For example, the specific threshold may be a priority value related to a pre-emption configured in the resource pool.

For example, if both partial sensing based resource selection and random resource selection are allowed in an SL resource pool, and the interference level or congestion level in the SL resource pool is greater than or equal to a specific threshold, a UE may perform partial sensing based resource selection.

For example, if both partial sensing based resource selection and random resource selection are allowed in the SL resource pool and SL HARQ feedback is enabled, a UE may perform partial sensing based resource selection.

For example, if both partial sensing based resource selection and random resource selection are allowed in an SL resource pool, and the HARQ ACK rate or HARQ NACK rate is less than or equal to a specific threshold, a UE may perform partial sensing based resource selection.

For example, if both partial sensing based resource selection and random resource selection are allowed in an SL resource pool and a NACK is received by a receiving UE for at least one transmission packet, a UE may perform partial sensing based resource selection.

For example, if both partial sensing based resource selection and random resource selection are allowed in an SL resource pool, and the number of consecutive NACKs received for at least one transmission packet is greater than or equal to a specific threshold, or the total number of NACKs received is greater than or equal to a specific threshold, a UE may perform partial sensing based resource selection.

For example, if both partial sensing based resource selection and random resource selection are allowed in an SL resource pool, and the reliability value related to a transmission packet is greater than or equal to a specific threshold, or the latency value related to a transmission packet is greater than or equal to a specific threshold, a UE may perform partial sensing based resource selection.

For example, if both partial sensing based resource selection and random resource selection are allowed in an SL resource pool, and the PDB for a transmission packet is greater than or equal to a specific threshold, a UE may perform partial sensing based resource selection.

For example, if both partial sensing based resource selection and random resource selection are allowed within an SL resource pool and it is the last retransmission for a specific TB, a UE may perform partial sensing based resource selection.

For example, a UE may perform partial sensing based resource selection if both partial sensing based resource selection and random resource selection are allowed within an SL resource pool, and the UE performs a specific number of retransmissions to a specific configuration value or a value configured by the network. For example, the retransmissions may include as many retransmissions from the last TB as a specific configuration value or a value configured by the network.

For example, if both partial sensing based resource selection and random resource selection are allowed within an SL resource pool and a UE does not have enough power left to perform full sensing, the UE may perform partial sensing based resource selection. For example, a UE may determine whether it has enough power to perform full sensing based on its battery usage/remaining power.

For example, if both partial sensing based resource selection and random resource selection are allowed in an SL resource pool, and the transmission power of a packet due to congestion control is less than or equal to a specific threshold, a UE may perform partial sensing based resource selection.

For example, if both partial sensing based resource selection and random resource selection are allowed in an SL resource pool, and a transmission of a neighboring non-power-saving UE, such as a Vehicle UE, is detected through UE type information transmitted via SCI, a UE may perform partial sensing based resource selection. For example, the UE type information may include information regarding whether it is a normal UE or a power-saving UE.

For example, if both partial sensing based resource selection and random resource selection are allowed in an SL resource pool, and the total number of possible retransmissions for a transmission packet is less than or equal to a specific threshold, a UE may perform partial sensing based resource selection.

According to an embodiment of the present disclosure, at least one of an RSRP threshold value used to select/determine a candidate resource based on SL partial sensing, a ratio X value of a candidate SL transmission resource to all possible SL transmission resources, or an RSRP offset value to adjust if the ratio X value is not satisfied, may be configured separately from an RSRP threshold, X value, or RSRP offset value used for resource selection based on full sensing.

For example, an RSRP threshold related to partial sensing may be configured to be higher than an RSRP threshold related to full sensing. For example, an X value related to partial sensing may be configured to be lower than an X value related to full sensing. For example, an RSRP offset value related to partial sensing may be configured to be greater than an RSRP offset value related to full sensing.

According to an embodiment of the present disclosure, a partial sensing pattern may be configured to a specific configuration value, or may be configured by the network. For example, a set of candidate resources Y based on partial sensing may be determined based on the partial sensing pattern.

According to an embodiment of the present disclosure, at least one of the number of the candidate resources, the set Y of the candidate resources, the number of the partial sensing slots, an interval between the partial sensing slots, or a partial sensing pattern may be configured differently specifically for a resource pool depending on whether HARQ feedback is enabled or disabled.

According to an embodiment of the present disclosure, at least one of the number of candidate resources, the set Y of the candidate resources, the number of partial sensing slots, an interval between partial sensing slots, or a partial sensing pattern may be configured differently specifically for a resource pool depending on whether resource selection is performed based on partial sensing or random resource selection.

According to an embodiment of the present disclosure, at least one of the number of candidate resources, the set Y of the candidate resources, the number of partial sensing slots, an interval between partial sensing slots, or a partial sensing pattern may be configured differently specifically for a resource pool depending on whether resource re-evaluation is allowed for the resource pool and/or whether pre-emption checking is allowed.

According to an embodiment of the present disclosure, a minimum number Y of candidate resources/slots for periodic-based partial sensing (PPS) may be configured as a specific threshold value, and a UE may select a number of candidate resources/slots greater than or equal to the Y implementationally. For example, the Y may be configured based on at least one of QoS requirements related to transport packets (e.g. latency, reliability, distance), priority of service/packet, cast type, congestion/interference level of the resource pool, size of transmission power, whether to transmit HARQ-enabled MAC PDUs, transmission of HARQ-disabled MAC PDUs, HARQ ACK ratio, HARQ NACK ratio, the number of consecutive HARQ NACK receptions, SL DRX operation status, whether it is an inter-UE coordinating UE that coordinates between UEs, whether it is an inter-UE coordinated UE coordinated between UEs, whether it is a relaying UE, whether remote or UE, sync selection priority of the reference sync signal of the UE, MCS size, number of layers, CSI, amount of remaining UE battery power, PDB of remaining transmitted packets, the maximum number of retransmissions for a packet, the number of retransmissions remaining or whether the peer UE is a P-UE.

According to an embodiment of the present disclosure, the priority of a packet transmitted through a resource selected based on partial sensing may be configured differently than the priority of a packet transmitted through a resource selected based on full sensing. For example, the priority of a transmission related to a resource selected based on partial sensing may be configured to be higher than the priority of a transmission related to a resource selected based on full sensing.

According to an embodiment of the present disclosure, the parameters for open-loop power control of a UE performing partial sensing (e.g., alpha value, beta value) may be configured separately from the parameters for open-loop power control of a UE performing full sensing. For example, the parameters may be configured such that the transmit power of a UE performing partial sensing based resource selection is configured to be higher than the transmit power of a UE performing full sensing based resource selection.

According to an embodiment of the present disclosure, for a UE performing partial sensing based resource selection while performing SL DRX operations, at the time point of the initial resource selection by triggering resource selection and reselection, the UE may select a resource based on/considering the results of sensing performed during an SL DRX on-duration or active time interval and the results of partial sensing.

For example, a timer related to SL DRX on-duration may be used in an interval where a UE performing SL DRX operation needs to operate with a default active time to receive PSCCH/PSSCH from the other UE.

For example, a configuration for SL DRX operation may include one or more of the information listed below.

For example, the SL drx-onDurationTimer may be information regarding the duration at the beginning of a DRX Cycle. For example, the duration at the beginning of a DRX Cycle may be information regarding the duration during which a UE is operating in active mode to transmit or receive sidelink data.

For example, SL drx-SlotOffset may be information regarding the delay before starting the drx-onDurationTimer.

For example, the SL drx-InactivityTimer may be information regarding the duration after the PSCCH occasion in which a PSCCH indicates a new sidelink transmission and sidelink reception for the MAC entity. For example, if a transmitting UE indicates transmission of a PSSCH via a PSCCH, the transmitting UE may transmit the PSSCH to a receiving UE by operating in active mode while the SL drx-InactivityTimer is running. Further, for example, if a receiving UE is indicated that a transmitting UE transmits a PSSCH by receiving a PSCCH, the receiving UE may receive the PSSCH from the transmitting UE by operating in the active mode while the SL drx-InactivityTimer is running.

For example, the SL drx-RetransmissionTimer may be information regarding the maximum duration until a retransmission is received. For example, the SL drx-RetransmissionTimer may be configured per HARQ process.

For example, SL drx-LongCycleStartOffset may be information regarding the Long DRX cycle and drx-StartOffset which defines the subframe where the Long and Short DRX Cycle starts.

For example, SL drx-ShortCycle may be information regarding the Short DRX cycle. For example, SL drx-ShortCycle may be optional information.

For example, SL drx-ShortCycleTimer may be information regarding the duration the UE shall follow the Short DRX cycle. For example, SL drx-ShortCycleTimer may be optional information.

For example, the SL drx-HARQ-RTT-Timer may be information regarding the minimum duration before an assignment for HARQ retransmission is expected by the MAC entity. For example, the SL drx-HARQ-RTT-Timer may be configured per HARQ process.

According to an embodiment of the present disclosure, when both a resource selection method based on partial sensing and a resource selection method based on full sensing are allowed for a resource pool, for a resource in which a resource configured for transmission based on partial sensing and a resource configured for transmission based on full sensing overlap each other within the resource pool, a UE performing resource selection based on full sensing may exclude resource selection for the overlapping resource, or may select the overlapping resource with a lower priority.

According to an embodiment of the present disclosure, when both a resource selection method based on partial sensing and a resource selection method based on random selection are allowed for a resource pool, for a resource in which a resource configured for transmission based on partial sensing and a resource configured for transmission based on random selection overlap each other within the resource pool, a UE performing resource selection method based on partial sensing may exclude resource selection for the overlapping resource, or select the overlapping resource with a lower priority.

According to an embodiment of the present disclosure, when both a resource selection method based on full sensing and a resource selection method based on random selection are configured to be allowed for a resource pool, for a resource in which a resource configured for transmission based on full sensing and a resource configured for transmission based on random selection overlap each other within the resource pool, a UE performing the resource selection method based on full sensing may exclude resource selection for the overlapping resource, or may select the overlapping resource with a lower priority.

According to an embodiment of the present disclosure, for a UE without PSCCH decoding capability, rather than performing sensing based on resource reservation information and RSRP transmitted via PSCCH, the UE may determine whether the resource is being utilized by another UE based on the received signal strength (RSSI) for the transmission resource. For example, if the RSSI of a specific transmission resource is greater than or equal to a specific threshold or a threshold configured by the network, a UE may determine that the transmission resource is being utilized by another UE. For example, if a transmission resource that is being utilized by another UE is detected based on the RSSI, a UE may exclude that resource from resource selection if the transmission resource which is determined by all or some of the transmission resource periodicities configured in the corresponding resource pool overlaps with a candidate resource in a selection window. For example, if a transmission resource is detected that is being used by another UE based on the above RSSI, and the detected transmission resource overlaps with a candidate resource in a selection window, a UE may exclude the detected transmission resource from resource selection.

According to an embodiment of the present disclosure, a resource selection method based on sensing based on the RSSI may include conditions for performing resource selection using the partial sensing. For example, the sensing results based on the RSSI may be considered together with the conventional sensing results based on PSCCH decoding, and may be used to select a transmission resource for the UE.

According to an embodiment of the present disclosure, whether to use a resource selection method based on sensing based on the RSSI may be configured to a specific configuration value, or may be configured by the network. For example, whether a UE uses a transmission resource selection method considering the results of sensing based on the RSSI together with the results of conventional sensing based on PSCCH decoding may be configured to a specific configuration value, or may be configured by the network.

According to an embodiment of the present disclosure, when detecting resource transmissions based on the RSSI and incorporating them into resource selection, a pre-emption checking priority may be configured differently or separately from a pre-emption checking priority used for at least one of resource selection based on full sensing, resource selection based on partial sensing, or random resource selection. For example, a pre-emption priority related to the RSSI-based resource selection may be configured at a lower priority than a pre-emption priority related to the PSCCH decoding-based resource selection. For example, a pre-emption priority related to the RSSI-based resource selection may be configured to a higher priority than a pre-emption priority related to the random selection-based resource selection.

For example, the priority of other UE transmissions detected based on the RSSI may be determined by a specific configuration value or a value configured by the network.

According to an embodiment of the present disclosure, when periodic transmission or partial sensing operation is allowed/configured in a resource pool, a UE performing periodic transmission may perform short-term sensing to avoid collisions with non-periodic transmission of other UEs. For example, if periodic transmission or partial sensing operation is allowed/configured in a resource pool, a UE performing periodic transmission may perform short-term sensing in addition to partial sensing. That is, for example, a UE may perform partial sensing to avoid collisions with periodic transmissions transmitted by other UEs and short-term sensing to avoid collisions with aperiodic transmissions of other UEs. For example, a UE may configure the range of the window for performing the short-term sensing to be [n+TA, n+TB] at time point n when resource selection is triggered. Here, for example, TA and TB may be configured to values not less than zero.

For example, for the short-term sensing window [n+TA, n+TB], the TA and TB values may be configured as negative values. In this case, if the TA and TB values are negative, it may mean that the short-time sensing window is configured before the time point n at which the resource selection is triggered. And, since a UE cannot know exactly when a transmission packet occurs, a short-term sensing window [n+TA, n+TB] for the configured negative values TA, TB may be a requirement for a minimum short-term sensing window that the UE should perform.

For example, since the time point n1 at which a UE predicts resource selection in connection with a periodic transmission is triggered may differ from the time point n2 at which the resource selection generated by the actual occurrence of a transmission packet is triggered, the UE may apply a margin equal to a specific configuration value or a value configured by the network above the interval [n+TA, n+TB] comprising the negative values TA and TB, considering the jitter corresponding to the difference between the n1 and n2. In this case, for example, a UE may perform short-term sensing temporally earlier than [n+TA, n+TB] by the configuration value. Alternatively, for example, the margin may be determined by the UE implementationally.

For example, the short-term sensing window [n+TA, n+TB] may be configured based on at least one of the priority of the transmission packet, the number of NACKs received for the transmission packet, the PDB related to the transmission packet, the latency requirement related to the transmission packet, the reliability requirement related to the transmission packet, the distance requirement related to the transmission packet, the congestion level of the transmission channel, whether it is an SL DRX operation, whether additional information related to inter-UE coordination is received, whether it is an in-coverage operation, whether it is an out-of-coverage operation, a cast type, a total number of retransmissions for the transmission packet, or a remaining number of retransmissions.

According to an embodiment of the present disclosure, a UE capable of performing partial sensing and short-term sensing may perform the following sensing operations. As used below, contiguous partial sensing (CPS) may refer to short-term sensing, and periodic-based partial sensing (PPS) may refer to partial sensing.

For example, when a UE performs continuous partial sensing, the UE's sensing operation may be categorized as follows. In this case, random resource selection performed without sensing may not be considered. Further, resource re-evaluation and pre-emption check may be considered in CPS. Alternatively, for example, resource re-evaluation and pre-emption checking may be not considered in CPS.

For example, in the context of CPS, a sensing type may be determined based on both traffic type allowed/sensing type configured in a resource pool, rather than the traffic type transmitted by a UE.

For example, in a resource pool where only aperiodic traffic is allowed and only CPS is configured, if resource (re) selection for aperiodic transmission is triggered in slot n, a UE may only perform CPS.

For example, in a resource pool where both periodic and aperiodic traffic are allowed, and both PPS and CPS are enabled, if resource (re)selection for periodic transmission is triggered in slot n, the UE may perform both CPS and PPS.

For example, in a resource pool where both periodic and aperiodic traffic are allowed, and both PPS and CPS are enabled, if resource (re)selection for aperiodic transmission is triggered, a UE may perform both CPS and PPS.

For example, referring to the above examples, a UE may perform CPS and a resource (re)selection triggered at slot n in a resource pool that is (pre)configured with CPS only, if no reservation for another TB (if carried within SCI) is active for the resource pool.

In this case, for example, a UE may monitor the slot between [n+T_A, n+T_B] for resource (re)selection, and the UE may perform resource (re)selection based on all available sensing results from the CPS available at the time point of resource (re)selection. For example, T_A and T_B may be equal to zero, or may be positive or negative. For example, conditions for changing between different options related to the sensing operation may be required, as well as conditions and parameters that trigger the change.

For example, referring to the above examples, a UE may perform CPS and resource (re)selection for a periodic transmission triggered at slot n, in a resource pool in which PPS and CPS are (pre)configured, if a reservation for another TB (if delivered within SCI) is enabled for the resource pool.

In this case, for example, for resource (re)selection, a UE may monitor the slots between [t_yk+T_A, t_yk+T_B] before each candidate slot t_yk (k=0, ..., Y-1), and the UE may perform resource (re)selection based on all available sensing results of the PPS and CPS available at the time point of resource (re)selection. For example, T_A and T_B may be equal to zero, or may be positive or negative. For example, conditions for changing between different options related to the sensing operation may be required, as well as conditions and parameters that trigger the change.

For example, referring to the above examples, a UE may perform CPS and resource (re)selection for an aperiodic transmission triggered at slot n, in a resource pool in which PPS and CPS are (pre)configured, if a reservation for another TB (if carried within SCI) is enabled for the resource pool.

In this case, for example, for resource (re)selection, a UE may monitor slots between [n+T_A, n+T_B] for resource (re)selection, and the UE may perform resource (re)selection based on all available sensing results from the CPS and PPS available at the time point of resource (re)selection. For example, T_A and T_B may be equal to zero, or may be positive or negative. For example, conditions for changing between different options related to the sensing operation may be required, as well as conditions and parameters that trigger the change.

According to an embodiment of the present disclosure, when periodic transmission and partial sensing are allowed for a resource pool, and a UE performs periodic transmission, for candidate slots selected for the partial sensing, the UE may perform CPS before the first of the candidate slots to avoid collisions with aperiodic transmission resources allowed in the resource pool. Here, for example, partial sensing may include PPS. For example, if periodic transmissions and partial sensing are allowed for a resource pool, and a UE performs periodic transmissions, for the candidate slots selected for the partial sensing, the UE may perform CPS at a UE processing time earlier than the timing of the first candidate slot among the candidate slots.

For example, for candidate slots greater than or equal to Y, when attempting to avoid collisions with aperiodic transmissions from other UEs based on a CPS performed prior to the first candidate slot as described above, the performance of avoiding collisions with aperiodic transmissions by the CPS may deteriorate as the time point of the candidate slot is farther in time from the end point of the CPS. To address this issue, a UE may group candidate slots into one or more segments based on a CPS window length. For example, a UE may perform CPS on each of the candidate slots belonging to each of the segments before the first candidate slot, or perform CPS on each of the candidate slots at a UE processing time earlier than the timing of the first candidate slot. For example, a UE may select candidate slots such that the positions of the candidate slots within each of the segments fall within a time range within a specific threshold value. For example, an interval between each of the segments may be determined based on the length of the CPS window.

According to an embodiment of the present disclosure, if at least partial sensing is allowed in the resource pool, resource (re)selection is triggered at time point n, and a UE performs CPS in the interval [n+TA, n+TB], the TA and TB may be configured/selected to satisfy the following equation.

$$[Equation\ 1]$$
$$n+TA \leq t_{(y\_0)}-Lwin \text{ and } n+TB \leq t_{(y\_0)} - T\_proc$$

For example, $t_{(y\_0)}$ may be the timing of the first slot in the resource selection window. Alternatively, for example, $t_{(y\_0)}$ may be the timing of the first candidate resource/slot among the candidate resources/slots for the PPS. For example, Lwin may be the length of the CPS window. For example, T_proc may be a minimum UE processing time required to determine an idle transmission resource based on partial sensing results.

For example, in a resource pool in which at least partial sensing is configured, if a UE performs CPS on [n+TA, n+TB], TA and TB may be determined as follows. For example, for random resource selection, both TA and TB may be zero. For example, TA and TB may be determined such that $n+TA \leq t_{(y\_0)}-31$ and $n+TB \leq t_{(y\_0)} - T\_proc$. Here, for example, $t_{(y\_0)}$ may be the timing of the first candidate resource for resource identification. For example, T_proc may be a UE processing time required for resource identification based on sensing results.

According to an embodiment of the present disclosure, if at least partial sensing is allowed and PSFCH resources are configured in the resource pool, a UE may select a transmission resource based on PPS or CPS and transmit a TB/MAC PDU with HARQ feedback enabled. In such cases, for example, a UE may need to select a candidate slot or SL transmission resource that is separated by an interval greater than HARQ RTT. For example, if the number of active/idle/SL transmission resources within the PDB related to the transmission TB that are separated from each other by the HARQ RTT is less than a specific threshold (e.g., the number of target resources), a UE may select some of the candidate slot or SL transmission resources separated by an interval smaller than the HARQ RTT. In this case, a UE may perform initial transmission and blind retransmission using resources separated by an interval less than the HARQ RTT for the TB, and the UE may perform HARQ feedback based retransmission using resources separated by an interval greater than or equal to the HARQ RTT.

According to an embodiment of the present disclosure, if at least partial sensing is allowed and PSFCH resources are configured in a resource pool, a UE may select a transmission resource based on PPS or CPS, and transmit a TB/MAC PDU with HARQ feedback enabled. In such a case, for example, regardless of whether the number of active/idle/SL transmission resources separated from each other by the HARQ RTT within the PDB related to the transmission TB is less than a specific threshold (e.g., the number of target resources), the UE may select some of the candidate slot or SL transmission resources separated by an interval smaller than the HARQ RTT. In this case, a UE may perform initial transmission and blind retransmission using resources separated by an interval less than the HARQ RTT for the TB, and the UE may perform HARQ feedback based retransmission using resources separated by an interval greater than or equal to the HARQ RTT.

According to an embodiment of the present disclosure, among the candidate slots as described above, candidate slots separated by an interval less than HARQ RTT may be considered as a group, and the interval between the groups may be considered as an interval between candidate slots separated by an interval greater than the HARQ RTT. In this case, in order to avoid collisions with aperiodic transmissions of other UEs, the UE may perform CPS before the timing of the first candidate slot among the candidate slots within each of the groups, or before a UE processing time earlier than the timing of the first candidate slot.

According to various embodiments of the present disclosure, the proposed partial sensing method may effectively support resource selection in NR-V2X systems that support both aperiodic and periodic transmissions.

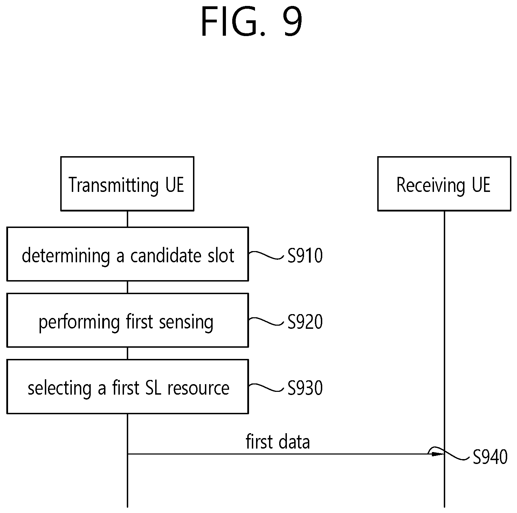

FIG. 9 shows a procedure in which a transmitting UE transmits first data to a receiving UE based on at least one first SL resource, according to an embodiment of the present disclosure. The embodiment of FIG. 9 may be combined with various embodiments of the present disclosure.

Referring to FIG. 9, in step S910, a transmitting UE may determine at least one candidate slot for selecting the first sidelink (SL) resource.

In step S920, a transmitting UE may perform a first sensing of the at least one slot related to the at least one candidate slot.

In step S930, a transmitting UE may select at least one first SL resource based on the first sensing.

In step S940, a transmitting UE may transmit first data based on the at least one first SL resource.

For example, randomly selecting an SL resource and selecting an SL resource by the first sensing may be allowed for a resource pool for the first SL resource.

For example, the priority of the first data may be higher than or equal to a pre-configured threshold. That is, for example, if the less the priority value, the higher the priority, the priority value of the first data may be less than or equal to a pre-configured threshold.

For example, the congestion level related to the resource pool for the at least one first SL resource may be greater than or equal to a pre-configured threshold.

For example, a periodic transmission may be allowed for the resource pool related to the at least one first SL resource is allowed.

For example, the possible number of retransmissions for the first data may be less than or equal to a pre-configured threshold.

For example, SL HARQ feedback may be enabled for the first data, at least one SL HARQ feedback may be received for the first data. For example, the ratio related to the at least one SL HARQ feedback may be less than or equal to a pre-configured threshold.

For example, the number of the at least one candidate slot may be determined to be the number greater than or equal to a pre-configured threshold. For example, the pre-configured threshold may be determined based on at least one of a quality of service, QoS, requirement related to the first data, a cast type, packet delay budget, PDB, related to the first data, remaining battery power of the transmitting UE.

For example, at least one of a number of the at least one candidate slots, a number of the at least one slot, or an interval between the at least one slot may be determined differently based on whether hybrid automatic repeat request, HARQ, feedback is enabled.

For example, the first sensing may include second sensing based on a received signal strength indication, RSSI, value for a first SL resource.

For example, the at least one first SL resource may be an SL resource from which the first SL resource with the RSSI greater than a pre-configured threshold is excluded.

For example, the first data may be periodically transmitted. For example, sensing duration may be determined based on a first time point at which resource selection is triggered. For example, the sensing duration may be located before a pre-configured value based on the at least one candidate slot. For example, the first sensing may include third sensing for the sensing duration. For example, the at least one candidate slot may be separated into one or more sets based on a length of the sensing duration. For example, the third sensing may be performed for each of the one or more sets.

For example, a transmitting UE may perform full sensing for a sensing window for selecting a second SL resource. For example, a transmitting UE may select at least one second SL resource based on the full sensing. For example, a transmitting UE may transmit second data based on the at least one second SL resource. For example, the priority for the first data may be determined to be different from the priority of the second data. For example, at least one of a reference signal received power, RSRP, threshold, a ratio value of a candidate SL resource, or an offset value for RSRP related to the sensing may be determined to be different from an RSRP value, a ratio value of a candidate SL resource, or an offset value for RSRP related to the full sensing.

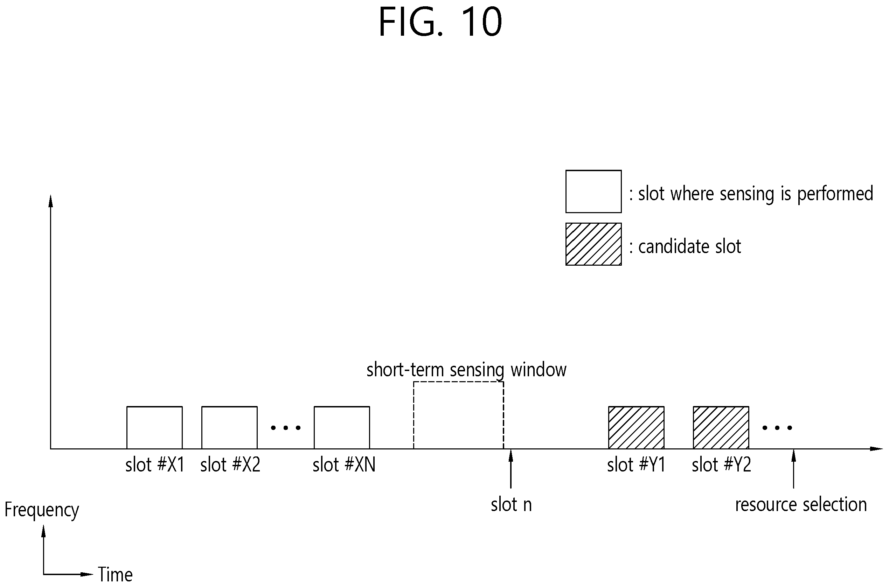

FIG. 10 shows an example of partial sensing, according to an embodiment of the present disclosure. The embodiment of FIG. 10 may be combined with various embodiments of the present disclosure.

Referring to FIG. 10, a transmitting UE may determine at least one candidate slot for selecting a first SL resource. Here, for example, slot #Y1, slot #Y2 may be at least one slot. For example, selecting an SL resource randomly and selecting an SL resource by the first sensing may be allowed for a resource pool for the first SL resource.

For example, a transmitting UE may perform a first sensing (e.g., period-based partial sensing) for at least one slot related to the at least one candidate slot. For example, slot #X1, slot #X2 may be the at least one slot. For example, slot #X1, slot #X2 may be determined based on a number of periodicities corresponding to a specific configuration value from the slot #Y1 or slot #Y2. For example, the periodicities may be periodicities of a transmission resource configured in the resource pool. For example, a resource (slot #X1, slot #X2) may be sensed at a time point that is temporally earlier than the time point (slot #Y1 or slot #Y2) of a candidate resource that is subject to resource collision determination by an integer multiple k value of each of the periodicities above. For example, the k value may be configured in a form of a bitmap.

For example, a transmitting UE may select at least one first SL resource within the at least one first candidate slot based on the first sensing. For example, a transmitting UE may transmit first SCI to a receiving UE including information for scheduling a PSSCH related to PSCCH via the PSCCH based on the at least one first SL resource. For example, a transmitting UE may transmit second SCI and first data to a receiving UE via a PSSCH related to the PSCCH based on the at least one first SL resource.

For example, the priority of the first data may be higher than or equal to a pre-configured threshold value, i.e., if, for example, a smaller priority value is a higher priority, the priority value of the first data may be less than or equal to the pre-configured threshold value.

For example, the first data may be transmitted periodically. For example, a sensing duration may be determined based on a first time point at which resource selection is triggered. For example, the sensing duration may be located prior to a pre-configured value based on the at least one candidate slot. For example, the first sensing may comprise a third sensing (e.g., a continuous partial sensing) for the sensing duration. For example, the sensing duration may be separated into one or more sets of the at least one candidate slot based on a length of the sensing duration. For example, the third sensing may be performed for each of the one or more sets.

For example, a transmitting UE performing periodic transmissions may additionally perform short-time sensing to avoid collisions with aperiodic transmissions of other UEs. For example, a transmitting UE may configure the range of a window in which the short-time sensing is performed to be [n+TA, n+TB] at a time point n at which resource selection is triggered. In this case, for example, TA and TB may be configured to a value that is not less than zero.

Alternatively, as shown in FIG. 10, for example, for the short-term sensing window [n+TA, n+TB], the TA and TB values may be configured as negative values. In this case, when the TA and TB values are negative, it may mean that the short-term sensing window is configured before the time point n at which the resource selection is triggered. And, since a transmitting UE cannot know exactly when the transmission packet occurs, a short-term sensing window [n+TA, n+TB] for the configured negative values TA, TB may be at least requirement for the short-term sensing window that a UE should perform.

In this case, for example, since the time point n1 at which a resource selection predicted by a transmitting UE with respect to a periodic transmission is triggered may be different from the time point n2 at which a resource selection generated by an actual transmission packet is triggered, a transmitting UE may apply a margin equal to a specific configuration value or a value configured by the network to the interval [n+TA, n+TB] comprising the negative values TA and TB, considering the jitter corresponding to the difference between the n1 and n2. In this case, for example, a transmitting UE may perform short-term sensing temporally earlier than [n+TA, n+TB] by the above configuration value. Alternatively, for example, the margin may be UE-implementatively determined by a transmitting UE.

For example, the short-term sensing window [n+TA, n+TB] may be configured based on at least one of the priority of the transmission packet, the number of NACKs received for the transmission packet, the PDB related to the transmission packet, the latency requirement related to the transmission packet, the reliability requirement related to the transmission packet, the distance requirement related to the transmission packet, the congestion level of the transmission channel, whether it is an SL DRX operation, whether additional information related to inter-UE coordination is received, whether it is an in-coverage operation, whether it is an out-of-coverage operation, a cast type, a total number of retransmissions for the transmission packet, or a remaining number of retransmissions.

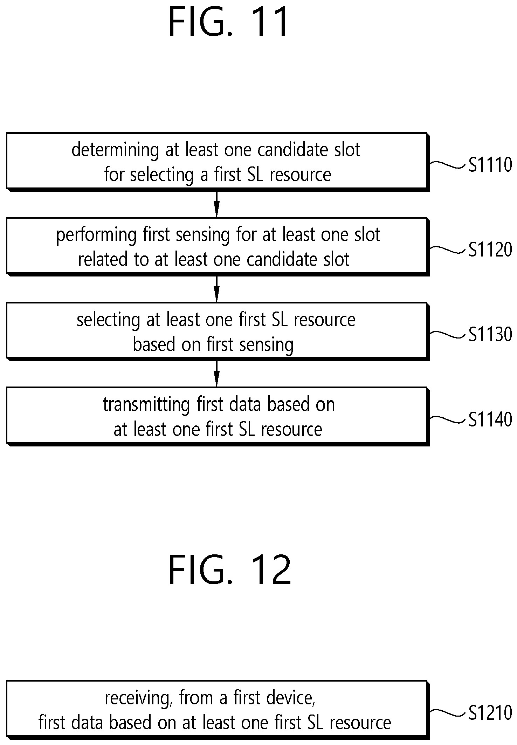

FIG. 11 shows a method for a first device to transmit first data based on at least one first SL resource, according to an embodiment of the present disclosure. The embodiment of FIG. 11 may be combined with various embodiments of the present disclosure.

Referring to FIG. 11, in step S1110, a first device 100 may determine at least one candidate slot for selecting a first sidelink, SL, resource.

In step S1120, a first device 100 may perform first sensing for at least one slot related to the at least one candidate slot.

In step S1130, a first device 100 may select at least one first SL resource based on the first sensing.

In step S1140, a fist device 100 may transmit first data based on the at least one first SL resource.

For example, randomly selecting an SL resource and selecting an SL resource by the first sensing may be allowed for a resource pool for the first SL resource.

For example, the priority of the first data may be higher than or equal to a pre-configured threshold. That is, for example, if the less the priority value, the higher the priority, the priority value of the first data may be less than or equal to a pre-configured threshold.

For example, the congestion level related to the resource pool for the at least one first SL resource may be greater than or equal to a pre-configured threshold.

For example, a periodic transmission may be allowed for the resource pool related to the at least one first SL resource is allowed.

For example, the possible number of retransmissions for the first data may be less than or equal to a pre-configured threshold.

For example, SL HARQ feedback may be enabled for the first data, at least one SL HARQ feedback may be received for the first data. For example, the ratio related to the at least one SL HARQ feedback may be less than or equal to a pre-configured threshold.

For example, the number of the at least one candidate slot may be determined to be the number greater than or equal to a pre-configured threshold. For example, the pre-configured threshold may be determined based on at least one of a quality of service, QoS, requirement related to the first data, a cast type, packet delay budget, PDB, related to the first data, remaining battery power of the first device 100.

For example, at least one of a number of the at least one candidate slots, a number of the at least one slot, or an interval between the at least one slot may be determined differently based on whether hybrid automatic repeat request, HARQ, feedback is enabled.

For example, the first sensing may include second sensing based on a received signal strength indication, RSSI, value for a first SL resource.

For example, the at least one first SL resource may be an SL resource from which the first SL resource with the RSSI greater than a pre-configured threshold is excluded.

For example, the first data may be periodically transmitted. For example, sensing duration may be determined based on a first time point at which resource selection is triggered. For example, the sensing duration may be located before a pre-configured value based on the at least one candidate slot. For example, the first sensing may include third sensing for the sensing duration. For example, the at least one candidate slot may be separated into one or more sets based on a length of the sensing duration. For example, the third sensing may be performed for each of the one or more sets.

For example, a first device 100 may perform full sensing for a sensing window for selecting a second SL resource. For example, a first device 100 may select at least one second SL resource based on the full sensing. For example, a first device 100 may transmit second data based on the at least one second SL resource. For example, the priority for the first data may be determined to be different from the priority of the second data. For example, at least one of a reference signal received power, RSRP, threshold, a ratio value of a candidate SL resource, or an offset value for RSRP related to the sensing may be determined to be different from an RSRP value, a ratio value of a candidate SL resource, or an offset value for RSRP related to the full sensing.

The embodiments described above may be applied to various devices described below. For example, a processor 102 of a first device 100 may determine at least one candidate slot for selecting a first sidelink, SL, resource. For example, a processor 102 of a first device 100 may perform first sensing for at least one slot related to the at least one candidate slot. For example, a processor 102 of a first device 100 may select at least one first SL resource based on the first sensing. For example, a processor 102 of a fist device 100 may transmit first data based on the at least one first SL resource.

According to an embodiment, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: determine at least one candidate slot for selecting a first sidelink, SL, resource; perform first sensing for at least one slot related to the at least one candidate slot; select at least one first SL resource based on the first sensing; and transmit first data based on the at least one first SL resource. For example, randomly selecting an SL resource and selecting an SL resource by the first sensing may be allowed for a resource pool for the first SL resource. For example, the priority of the first data may be higher than or equal to a pre-configured threshold. That is, for example, if the less the priority value, the higher the priority, the priority value of the first data may be less than or equal to a pre-configured threshold.

According to an embodiment, a device adapted to control a first user equipment, UE, may be proposed. For example, the device may comprise: one or more processors; and one or more memories operably connectable to the one or more processors and storing instructions. For example, the one or more processors may execute the instructions to: determine at least one candidate slot for selecting a first sidelink, SL, resource; perform first sensing for at least one slot related to the at least one candidate slot; select at least one first SL resource based on the first sensing; and transmit first data based on the at least one first SL resource. For example, randomly selecting an SL resource and selecting an SL resource by the first sensing may be allowed for a resource pool for the first SL resource. For example, the priority of the first data may be higher than or equal to a pre-configured threshold. That is, for example, if the less the priority value, the higher the priority, the priority value of the first data may be less than or equal to a pre-configured threshold.

According to an embodiment, a non-transitory computer-readable storage medium storing instructions may be proposed. For example, the instructions, when executed, may cause a first device to: determine at least one candidate slot for selecting a first sidelink, SL, resource; perform first sensing for at least one slot related to the at least one candidate slot; select at least one first SL resource based on the first sensing; and transmit first data based on the at least one first SL resource. For example, randomly selecting an SL resource and selecting an SL resource by the first sensing may be allowed for a resource pool for the first SL resource. For example, the priority of the first data may be higher than or equal to a pre-configured threshold. That is, for example, if the less the priority value, the higher the priority, the priority value of the first data may be less than or equal to a pre-configured threshold.

FIG. 12 shows a method for a second device to receive first data based on at least one first SL resource from a first device, according to an embodiment of the present disclosure. The embodiment of FIG. 12 may be combined with various other embodiments of the present disclosure.

Referring to FIG. 12, in step S1210, a second device 100 may receive, from a first device, first data based on at least one first sidelink, SL, resource.

For example, at least one candidate slot for selecting the first SL resource may be determined.

For example, first sensing for at least one slot related to the at least one candidate slot may be performed.

For example, the at least one first SL resource may be selected based on the first sensing.

For example, randomly selecting an SL resource and selecting an SL resource by the first sensing may be allowed for a resource pool for the first SL resource.

For example, the priority of the first data may be higher than or equal to a pre-configured threshold. That is, for example, if the less the priority value, the higher the priority, the priority value of the first data may be less than or equal to a pre-configured threshold.

For example, the congestion level related to the resource pool for the at least one first SL resource may be greater than or equal to a pre-configured threshold.

For example, a periodic transmission may be allowed for the resource pool related to the at least one first SL resource is allowed.

For example, the possible number of retransmissions for the first data may be less than or equal to a pre-configured threshold.

For example, SL HARQ feedback may be enabled for the first data, at least one SL HARQ feedback may be received for the first data. For example, the ratio related to the at least one SL HARQ feedback may be less than or equal to a pre-configured threshold.

For example, the number of the at least one candidate slot may be determined to be the number greater than or equal to a pre-configured threshold. For example, the pre-configured threshold may be determined based on at least one of a quality of service, QoS, requirement related to the first data, a cast type, packet delay budget, PDB, related to the first data, remaining battery power of the first device 100.

For example, at least one of a number of the at least one candidate slots, a number of the at least one slot, or an interval between the at least one slot may be determined differently based on whether hybrid automatic repeat request, HARQ, feedback is enabled.

For example, the first sensing may include second sensing based on a received signal strength indication, RSSI, value for a first SL resource.

For example, the at least one first SL resource may be an SL resource from which the first SL resource with the RSSI greater than a pre-configured threshold is excluded.

For example, the first data may be periodically transmitted. For example, sensing duration may be determined based on a first time point at which resource selection is triggered. For example, the sensing duration may be located before a pre-configured value based on the at least one candidate slot. For example, the first sensing may include third sensing for the sensing duration. For example, the at least one candidate slot may be separated into one or more sets based on a length of the sensing duration. For example, the third sensing may be performed for each of the one or more sets.

For example, full sensing may be performed for a sensing window for selecting a second SL resource. For example, at least one second SL resource may be selected based on the full sensing. For example, a second device 200 may receive, from a first device 100, second data based on the at least one second SL resource. For example, the priority for the first data may be determined to be different from the priority of the second data. For example, at least one of a reference signal received power, RSRP, threshold, a ratio value of a candidate SL resource, or an offset value for RSRP related to the sensing may be determined to be different from an RSRP value, a ratio value of a candidate SL resource, or an offset value for RSRP related to the full sensing.

The embodiments described above may be applied to various devices described below. First, for example, a processor 202 of a second device may control a transceiver 206 to receive, from a first device 100, first data based on at least one first sidelink, SL, resource.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, first data based on at least one first sidelink, SL, resource. For example, at least one candidate slot for selecting the first SL resource may be determined. For example, first sensing for at least one slot related to the at least one candidate slot may be performed. For example, the at least one first SL resource may be selected based on the first sensing. For example, randomly selecting an SL resource and selecting an SL resource by the first sensing may be allowed for a resource pool for the first SL resource. For example, the priority of the first data may be higher than or equal to a pre-configured threshold. That is, for example, if the less the priority value, the higher the priority, the priority value of the first data may be less than or equal to a pre-configured threshold.

Various embodiments of the present disclosure may be combined with each other.

Various embodiments of the disclosure may be implemented independently. Alternatively, various embodiments of the disclosure may be implemented in combination or in combination with each other. For example, while various embodiments of the disclosure are described based on the 3GPP system for ease of description, various embodiments of the disclosure may be extensible to systems other than the 3GPP system. For example, various embodiments of the present disclosure are not limited to direct UE-to- UE communication, but may also be used in uplink or downlink, where a base station, relay node, or the like may use the proposed methods according to various embodiments of the present disclosure. For example, information regarding whether a method according to various embodiments of the present disclosure applies may be defined to be communicated by a base station to a UE, or by a second device 200 to a receiving UE, via a predefined signal (e.g., a physical layer signal or a higher layer signal). For example, information regarding rules according to various embodiments of the present disclosure may be defined to be communicated by a base station to a UE, or by a second device 200 to a receiving UE, via a predefined signal (e.g., physical layer signal or higher layer signal).

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

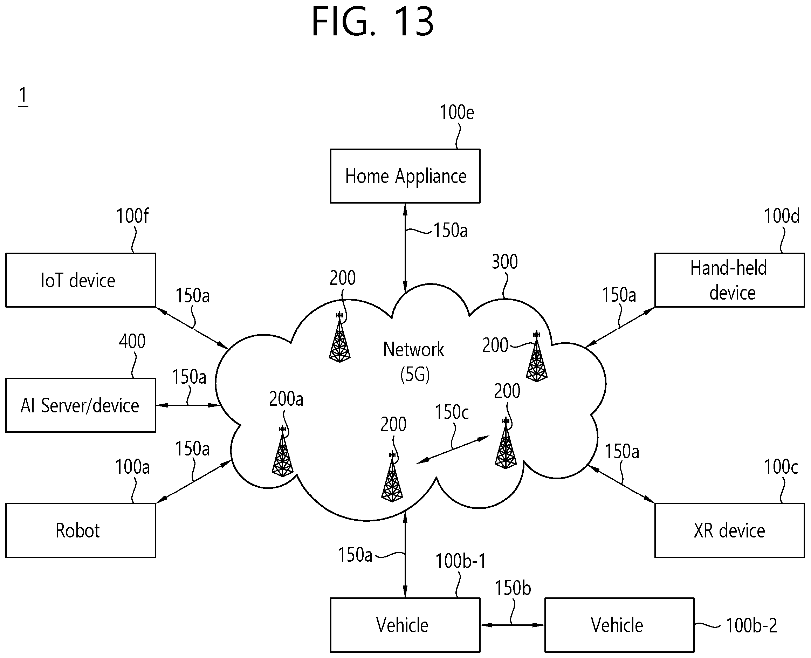

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

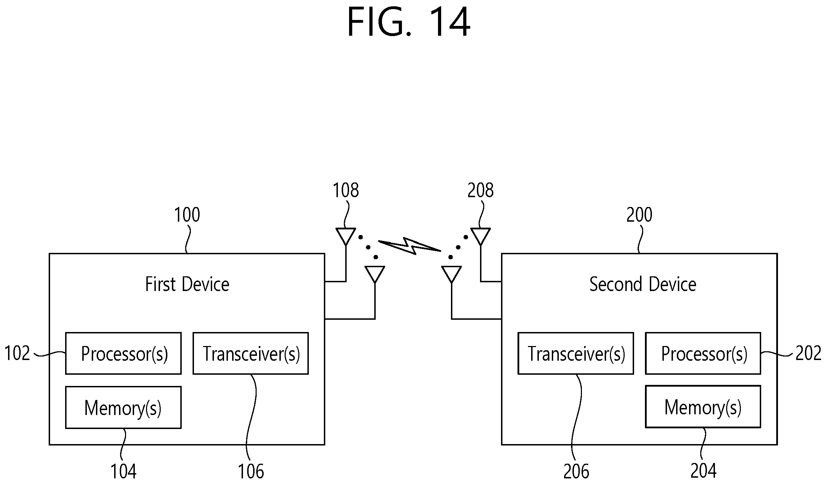

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

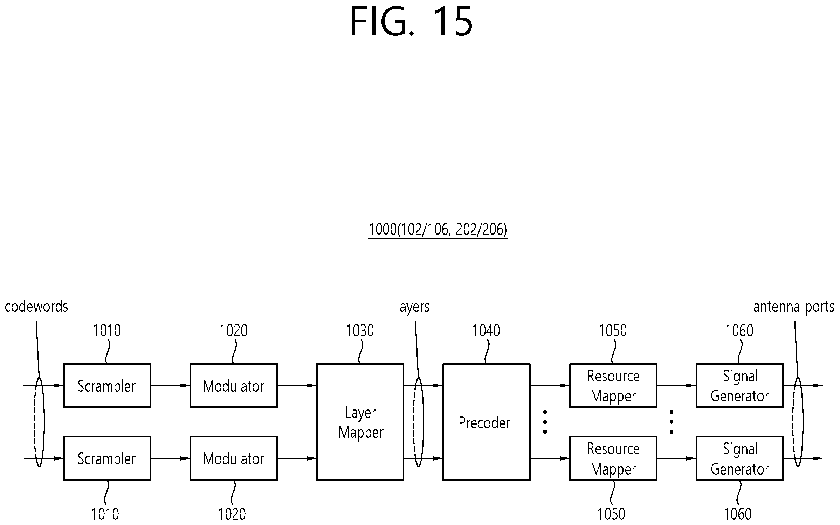

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

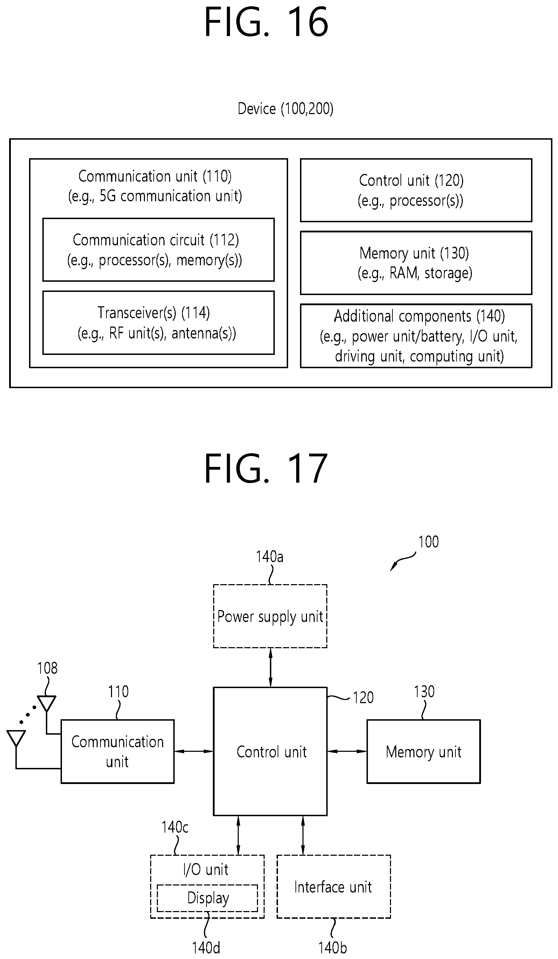

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

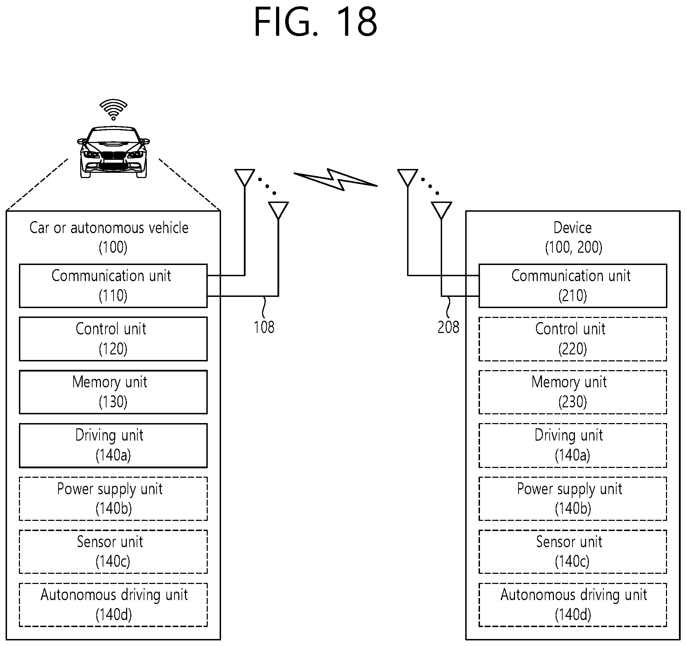

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

**Claims**

1. A method for performing, by a first device (10, 100), wireless communication, the method comprising:

   determining (S910, S1110) at least one candidate slot for selecting at least one first sidelink, SL, resource;
   performing (S920, S1120) partial sensing for partial sensing-based resource selection on at least one slot related to the at least one candidate slot,
   wherein random resource selection and the partial sensing-based resource selection are allowed for a resource pool including the at least one candidate slot, and
   wherein the partial sensing for the partial sensing-based resource selection, among random resource selection and the partial sensing-based resource selection, is performed based on a number of received consecutive NACKs being greater than or equal to a first threshold;
   selecting (S930, S1130) the at least one first SL resource based on the partial sensing; and
   transmitting (S940, S1140) first data based on the at least one first SL resource.

2. The method of claim 1, wherein a periodic transmission is allowed for the resource pool.

3. The method of claim 1, wherein a possible number of retransmissions for the first data is less than or equal to a second threshold.

4. The method of claim 1, wherein a number of the at least one candidate slot is determined to be a number greater than or equal to a second threshold, and
   wherein the second threshold is determined based on at least one of a quality of service, QoS, requirement related to the first data, a cast type, packet delay budget, PDB, related to the first data, remaining battery power of the first device (10, 100).

5. The method of claim 1, wherein at least one of a number of the at least one candidate slots, a number of the at least one slot, or an interval between the at least one slot is determined differently based on whether hybrid automatic repeat request, HARQ,
   feedback is enabled.

6. A first device (10, 100) for performing wireless communication, the first device (10, 100) comprising:

one or more memories (104) storing instructions;
one or more transceivers (106); and
one or more processors (102) connected to the one or more memories (104) and the one or more transceivers (106), wherein the one or more processors (102) execute the instructions to:

determine (S910, S 1110) at least one candidate slot for selecting at least one first sidelink, SL, resource;
perform (S920, S1120) partial sensing for partial sensing-based resource selection on at least one slot related to the at least one candidate slot,
wherein random resource selection and the partial sensing-based resource selection are allowed for a resource pool including the at least one candidate slot, and
wherein the partial sensing for the partial sensing-based resource selection, among random resource selection and the partial sensing-based resource selection, is performed based on a number of received consecutive NACKs being greater than or equal to a first threshold;
select (S930, S 1130) the at least one first SL resource based on the partial sensing; and
transmit (S940, S1140) first data based on the at least one first SL resource.

7. A device (10, 100) adapted to control a first user equipment, UE, the device (10, 100) comprising:

one or more processors (102); and
one or more memories (104) operably connectable to the one or more processors (102) and storing instructions, wherein the one or more processors (102) execute the instructions to:

determine (S910, S 1110) at least one candidate slot for selecting at least one first sidelink, SL, resource;
perform (S920, S1120) partial sensing for partial sensing-based resource selection on at least one slot related to the at least one candidate slot,
wherein random resource selection and the partial sensing-based resource selection are allowed for a resource pool including the at least one candidate slot, and
wherein the partial sensing for the partial sensing-based resource selection, among random resource selection and the partial sensing-based resource selection, is performed based on a number of received consecutive NACKs being greater than or equal to a first threshold;
select (S930, S 1130) the at least one first SL resource based on the partial sensing; and
transmit (S940, S1140) first data based on the at least one first SL resource.

## Patentansprüche

1. Verfahren zum Durchführen, durch eine erste Vorrichtung (10, 100), einer drahtlosen Kommunikation, wobei das Verfahren umfasst:

Bestimmen (S910, S1110) mindestens eines Kandidatenslots zum Auswählen mindestens einer ersten Sidelink- bzw. SL-Ressource;
Durchführen (S920, S1120) einer Teilerfassung zur teilerfassungsbasierten Ressourcenauswahl auf mindestens einem Slot bezüglich des mindestens einen Kandidatenslots,
wobei zufällige Ressourcenauswahl und die teilerfassungsbasierte Ressourcenauswahl für einen Ressourcenpool erlaubt sind, der den mindestens einen Kandidatenslot einschließt, und
wobei die Teilerfassung zur teilerfassungsbasierten Ressourcenauswahl, unter zufälliger Ressourcenauswahl und der teilerfassungsbasierten Ressourcenauswahl, basierend auf einer Anzahl empfangener aufeinanderfolgender NACKs durchgeführt wird, die größer oder gleich einer ersten Schwelle ist;
Auswählen (S930, S1130) der mindestens einen ersten SL-Ressource basierend auf der Teilerfassung; und
Übertragen (S940, S1140) erster Daten basierend auf der mindestens einen ersten SL-Ressource.

2. Verfahren nach Anspruch 1, wobei eine periodische Übertragung für den Ressourcenpool erlaubt ist.

3. Verfahren nach Anspruch 1, wobei eine mögliche Anzahl von Neuübertragungen für die ersten Daten kleiner oder gleich einer zweiten Schwelle ist.

4. Verfahren nach Anspruch 1, wobei eine Anzahl des mindestens einen Kandidatenslots als eine Anzahl größer oder gleich einer zweiten Schwelle bestimmt wird, und wobei die zweite Schwelle basierend auf mindestens einem von einer Dienstgüte- bzw. QoS-Anforderung bezüglich der ersten Daten, einem Cast-Typ, Paketverzögerungsbudget, PDB, bezüglich der ersten Daten, verbleibender Batterieleistung der ersten Vorrichtung (10, 100) bestimmt wird.

5. Verfahren nach Anspruch 1, wobei mindestens eines von einer Anzahl des mindestens einen Kandidatenslots, einer Anzahl des mindestens einen Slots oder eines Intervalls zwischen dem mindestens einen Slot basierend darauf unterschiedlich bestimmt wird, ob eine Rückmeldung einer hybriden automatischen Wiederholungsanforderung, HARQ, aktiviert ist.

6. Erste Vorrichtung (10, 100) zum Durchführen einer drahtlosen Kommunikation, wobei die erste Vorrichtung (10, 100) umfasst:

einen oder mehrere Speicher (104), die Anweisungen speichern;
einen oder mehrere Sendeempfänger (106); und
einen oder mehrere Prozessoren (102), die mit dem einen oder den mehreren Speichern (104) und dem einen oder den mehreren Sendeempfängern (106) verbunden sind, wobei der eine oder die mehreren Prozessoren (102) die Anweisungen ausführen zum:

Bestimmen (S910, S1110) mindestens eines Kandidatenslots zum Auswählen mindestens einer ersten Sidelink- bzw. SL-Ressource;
Durchführen (S920, S1120) einer Teilerfassung zur teilerfassungsbasierten Ressourcenauswahl auf mindestens einem Slot bezüglich des mindestens einen Kandidatenslots,
wobei zufällige Ressourcenauswahl und die teilerfassungsbasierte Ressourcenauswahl für einen Ressourcenpool erlaubt sind, der den mindestens einen Kandidatenslot einschließt, und
wobei die Teilerfassung zur teilerfassungsbasierten Ressourcenauswahl, unter zufälliger Ressourcenauswahl und der teilerfassungsbasierten Ressourcenauswahl, basierend auf einer Anzahl empfangener aufeinanderfolgender NACKs durchgeführt wird, die größer oder gleich einer ersten Schwelle ist;
Auswählen (S930, S1130) der mindestens einen ersten SL-Ressource basierend auf der Teilerfassung; und
Übertragen (S940, S1140) erster Daten basierend auf der mindestens einen ersten SL-Ressource.

7. Vorrichtung (10, 100), die zum Steuern eines ersten Benutzergeräts, UE, eingerichtet ist, wobei die Vorrichtung (10, 100) umfasst:

einen oder mehrere Prozessoren (102); und
einen oder mehrere Speicher (104), die operativ mit dem einen oder den mehreren Prozessoren (102) verbindbar sind und Anweisungen speichern, wobei der eine oder die mehreren Prozessoren (102) die Anweisungen ausführen zum:

Bestimmen (S910, S1110) mindestens eines Kandidatenslots zum Auswählen mindestens einer ersten Sidelink- bzw. SL-Ressource;
Durchführen (S920, S1120) einer Teilerfassung zur teilerfassungsbasierten Ressourcenauswahl auf mindestens einem Slot bezüglich des mindestens einen Kandidatenslots,
wobei zufällige Ressourcenauswahl und die teilerfassungsbasierte Ressourcenauswahl für einen Ressourcenpool erlaubt sind, der den mindestens einen Kandidatenslot einschließt, und
wobei die Teilerfassung zur teilerfassungsbasierten Ressourcenauswahl, unter zufälliger Ressourcenauswahl und der teilerfassungsbasierten Ressourcenauswahl, basierend auf einer Anzahl empfangener aufeinanderfolgender NACKs durchgeführt wird, die größer oder gleich einer ersten Schwelle ist;
Auswählen (S930, S1130) der mindestens einen ersten SL-Ressource basierend auf der Teilerfassung; und
Übertragen (S940, S1140) erster Daten basierend auf der mindestens einen ersten SL-Ressource.

**Revendications**

1. Procédé de réalisation, par un premier dispositif (10, 100), d'une communication sans fil, le procédé comprenant :

la détermination (S910, S1110) d'au moins un slot candidat pour la sélection d'au moins une première ressource en liaison latérale, SL ;
la réalisation (S920, S1120) d'une détection partielle pour une sélection de ressource basée sur la détection partielle sur au moins un slot lié à l'au moins un slot candidat,

une sélection de ressource aléatoire et la sélection de ressource basée sur la détection partielle étant autorisées pour un pool de ressources comportant l'au moins un slot candidat, et

la détection partielle pour la sélection de ressource basée sur la détection partielle, parmi une sélection de ressource aléatoire et la sélection de ressource basée sur la détection partielle, étant réalisée à condition qu'un nombre de NACK consécutifs reçus soit supérieur ou égal à un premier seuil ;

la sélection (S930, S1130) de l'au moins une première ressource SL sur la base de la détection partielle ; et

la transmission (S940, S1140) de premières données sur la base de l'au moins une première ressource SL.

2. Procédé selon la revendication 1, dans lequel une transmission périodique est autorisée pour le pool de ressources.

3. Procédé selon la revendication 1, dans lequel un nombre possible de retransmissions pour les premières données est inférieur ou égal à un deuxième seuil.

4. Procédé selon la revendication 1, dans lequel un nombre de l'au moins un slot candidat est déterminé comme étant un nombre supérieur ou égal à un deuxième seuil, et

dans lequel le deuxième seuil est déterminé sur la base d'au moins un élément parmi une exigence de qualité de service, QoS, liée aux premières données, un type de diffusion, un budget de retard des paquets, PDB, lié aux premières données, une capacité de batterie restante du premier dispositif (10, 100).

5. Procédé selon la revendication 1, dans lequel au moins un élément parmi un nombre de l'au moins un slot candidat, un nombre de l'au moins un slot, ou un intervalle entre l'au moins un slot est déterminé différemment selon qu'un retour d'information du mécanisme hybride de demande automatique de répétition, HARQ, est ou non activé.

6. Premier dispositif (10, 100) pour réaliser une communication sans fil, le premier dispositif (10, 100) comprenant :

une ou plusieurs mémoires (104) stockant des instructions ;
un ou plusieurs émetteurs-récepteurs (106) ; et
un ou plusieurs processeurs (102) connectés à la ou aux mémoires (104) et au ou aux émetteurs-récepteurs (106), le ou les processeurs (102) exécutant les instructions pour :

déterminer (S910, S1110) au moins un slot candidat pour la sélection d'au moins une première ressource en liaison latérale, SL ;

réaliser (S920, S1120) une détection partielle pour une sélection de ressource basée sur la détection partielle sur au moins un slot lié à l'au moins un slot candidat, une sélection de ressource aléatoire et la sélection de ressource basée sur la détection partielle étant autorisées pour un pool de ressources comportant l'au moins un slot candidat, et

la détection partielle pour la sélection de ressource basée sur la détection partielle, parmi une sélection de ressource aléatoire et la sélection de ressource basée sur la détection partielle, étant réalisée à condition qu'un nombre de NACK consécutifs reçus soit supérieur ou égal à un premier seuil ;

sélectionner (S930, S1130) l'au moins une première ressource SL sur la base de la détection partielle ; et

transmettre (S940, S1140) des premières données sur la base de l'au moins une première ressource SL.

7. Dispositif (10, 100) adapté à commander un premier équipement utilisateur, UE, le dispositif (10, 100) comprenant :

un ou plusieurs processeurs (102) ; et
une ou plusieurs mémoires (104) aptes à être connectées fonctionnellement au ou aux processeurs (102) et stockant des instructions, le ou les processeurs (102) exécutant les instructions pour :

déterminer (S910, S1110) au moins un slot candidat pour la sélection d'au moins une première ressource en liaison latérale, SL ;

réaliser (S920, S1120) une détection partielle pour une sélection de ressource basée sur la détection partielle sur au moins un slot lié à l'au moins un slot candidat, une sélection de ressource aléatoire et la sélection de ressource basée sur la détection partielle étant autorisées pour un pool de ressources comportant l'au moins un slot candidat, et

la détection partielle pour la sélection de ressource basée sur la détection partielle, parmi une sélection de ressource aléatoire et la sélection de ressource basée sur la détection partielle, étant réalisée à condition qu'un nombre de NACK consécutifs reçus soit supérieur ou égal à un premier seuil ;

sélectionner (S930, S1130) l'au moins une première ressource SL sur la base de la détection partielle ; et

transmettre (S940, S1140) des premières données sur la base de l'au moins une première ressource SL.

# FIG. 1

# FIG. 2

# FIG. 3

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 280 735 B1

# FIG. 5

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

CRB 0

$N_{BWP, 0}^{start}$

$N_{BWP, 1}^{start}$

$N_{BWP, 2}^{start}$

Carrier
Bandwidth

Freq.

Time

PRB 0 (Point A) in reference resource block

# FIG. 6

(a)

(b)

# FIG. 7

(a)

(b)

(c)

● : TX UE

◎ : RX UE

# FIG. 8

# FIG. 9

| Transmitting UE | | Receiving UE |
|---|---|---|

determining a candidate slot — S910

performing first sensing — S920

selecting a first SL resource — S930

first data → S940

# FIG. 10

: slot where sensing is performed

: candidate slot

short-term sensing window

slot #X1  slot #X2  · · ·  slot #XN   slot #Y1  slot #Y2  · · ·

Frequency

slot n   resource selection

Time

# FIG. 11

determining at least one candidate slot
for selecting a first SL resource — S1110

performing first sensing for at least one slot
related to at least one candidate slot — S1120

selecting at least one first SL resource
based on first sensing — S1130

transmitting first data based on
at least one first SL resource — S1140

# FIG. 12

receiving, from a first device,
first data based on at least one first SL resource — S1210

# FIG. 13

1

EP 4 280 735 B1

# FIG. 14

# FIG. 15

1000(102/106, 202/206)

# FIG. 16

Device (100,200)

| | |
|---|---|
| **Communication unit (110)** (e.g., 5G communication unit)<br><br>Communication circuit (112) (e.g., processor(s), memory(s))<br><br>Transceiver(s) (114) (e.g., RF unit(s), antenna(s)) | **Control unit (120)** (e.g., processor(s))<br><br>Memory unit (130) (e.g., RAM, storage)<br><br>Additional components (140) (e.g., power unit/battery, I/O unit, driving unit, computing unit) |

# FIG. 17

# FIG. 18

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Discussion on resource allocation for power saving. *3GPP document R1-2007895*

- Discussion on resource allocation for power saving. *3GPP document R1-2008950*